# EUROPEAN PATENT SPECIFICATION

(11) **EP 1 369 295 B1**
(45) Date of publication and mention of the grant of the patent: **16.04.2008**
(21) Application number: 03076630.7
(22) Date of filing: 28.05.2003
(51) Int. Cl.: B60N 2/28

(54) **A chassis suitable for attaching an infant vehicle seat to a vehicle seat, such an assembly and an infant vehicle seat**
Träger zum Befestigen eines Kindersitzes an einem Fahrzeugsitz, eine solche Einrichtung und ein Fahrzeugkindersitz
Châssis pour fixer un siège d'enfants à un siège de véhicules, un tel assemblage et un siège d'enfants pour véhicules

(30) Priority: 05.06.2002 NL 1020766
(43) Date of publication of application: 10.12.2003
(73) Proprietor: Maxi Miliaan B.V., 5705 DG Helmond (NL)
(72) Inventor: Siewertsen, Adriaan, 5691 MD Son en Breugel (NL); van der Mullen, Alphonse Leonard Jean Marie, 5986 CE Beringe (NL)
(74) Representative: Veldman-Dijkers, Cornelia G. C.

(56) References cited:
- CH-A- 675 230
- DE-C- 19 850 255
- US-A- 5 890 762
- US-B1- 6 375 260

## Description

The invention relates to a chassis suitable for attaching an infant vehicle seat to a vehicle seat, in which the chassis can be detachably attached to the vehicle seat, whilst the infant vehicle seat can be detachably connected to the chassis.

A chassis of this kind, which is known per se, is detachably attached to brackets present in a vehicle seat by means of specific mounting means. It is also possible to detachably attach the chassis to the vehicle seat by means of the seat belts present in the vehicle seat. Subsequently, a detachable infant vehicle seat is placed on the chassis. A chassis having the features of the preamble of claim 1 is known from US-A-6375260.

The advantage of using a detachable connection between the infant vehicle seat and the chassis is that the chassis can remain behind in the vehicle upon removal of the infant vehicle seat from the vehicle. The chassis can be optimally designed with a view to realising a firm connection between the infant vehicle seat and the vehicle seat. It is important in this regard that once the chassis has been fitted in a vehicle, the infant vehicle seat can be connected to the chassis and be disconnected therefrom in a simple yet reliable manner. If the connection between the infant vehicle seat and the chassis is not correctly effected, there is a risk of the infant vehicle seat being undesirably disconnected from the chassis in case of a collision of the vehicle.

Consequently it is an object of the present invention to provide a chassis to which an infant vehicle seat can be connected in a relatively quick and reliable manner.

This objective is accomplished with the chassis according to the invention in that the chassis comprises a number of locating pins which are movable against spring force, a slide which is movable against spring force, and a number of locking pins which are movable by means of said slide, in which the locating pins can be moved against spring force from a first position to a second position by positioning the infant vehicle seat on the chassis, after which the slide can be moved in a locking direction under the influence of spring force, said locking pins being movable from a first position, in which they are positioned in the chassis, to a second position, in which they engage in the infant vehicle seat.

With the chassis according to the invention, the locating pins are depressed by positioning the infant vehicle seat on the chassis. This causes the slide to be released and moved, enabling the locking pins to engage in the infant vehicle seat. The locking pins ensure a firm connection between the infant vehicle seat and the chassis.

One embodiment of the chassis according to the invention is characterized in that the slide can be moved in the locking direction when all the locating pins are in the second position.

In this way it is ensured that the slide cannot move and the locking pins will not be moved into engagement with the infant vehicle seat until the infant vehicle seat is positioned fully correctly on the chassis, in which position all the locating pins are depressed. If one of the locating pins is not depressed, or insufficiently so, movement of the slide will not be possible and none of the locking pins will be moved into engagement with the infant vehicle seat. In this manner it is very easy for the user to check whether the infant vehicle seat is connected to the chassis, inter alia because the locking pins can visibly extend through the infant vehicle seat and because the infant vehicle seat cannot be moved anymore.

Another embodiment of the chassis according to the invention is characterized in that the slide is provided with a number of slots extending at an angle to the locking direction, with the locking pins, which extend transversely to the locking direction, being provided with rods which are slidably accommodated in said slots.

Upon movement of the slide in the locking direction, said rods will be moved through the slots, as a result of which the locking pins, which extend transversely to the locking direction, are moved into engagement with the infant vehicle seat. Conversely, movement of the slide in a direction opposed to the locking direction will cause the locking pins to move out of the infant vehicle seat.

The invention will be explained in more detail hereinafter with reference to the drawings, in which:
Figure 1 is a perspective view of a chassis according to the invention;
Figure 2 is an exploded view of the chassis that is shown in Figure 1;
Figure 3 is a top plan view of a part of the chassis that is shown in Figure 1, showing the slide in a position in which the locking rods are extended;
Figure 4 is a side elevation of the chassis that is shown in Figure 3;
Figure 5 is a perspective cross-sectional view of the chassis that is shown in Figure 1, in which the locking pins are shown to be positioned in the chassis;
Figure 6 is a perspective view of the chassis that is shown in Figure 1, showing the locking pins in the locked position;
Figure 7 is a cross-sectional view along the line VII-VII of the chassis that is shown in Figure 1, in which the locking pins are shown to be positioned in the chassis; and
Figure 8 is a cross-sectional view along the line VIII-VIII of the chassis that is shown in Figure 1, in which an infant seat is mounted on the chassis.

Like parts are indicated by the same numerals in the various Figures.

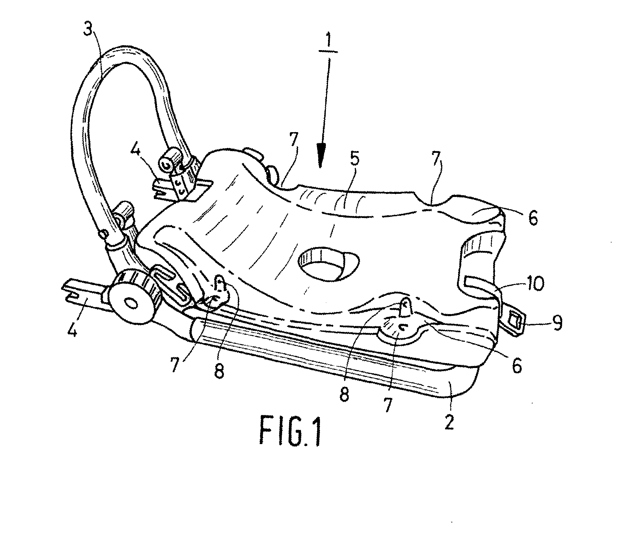

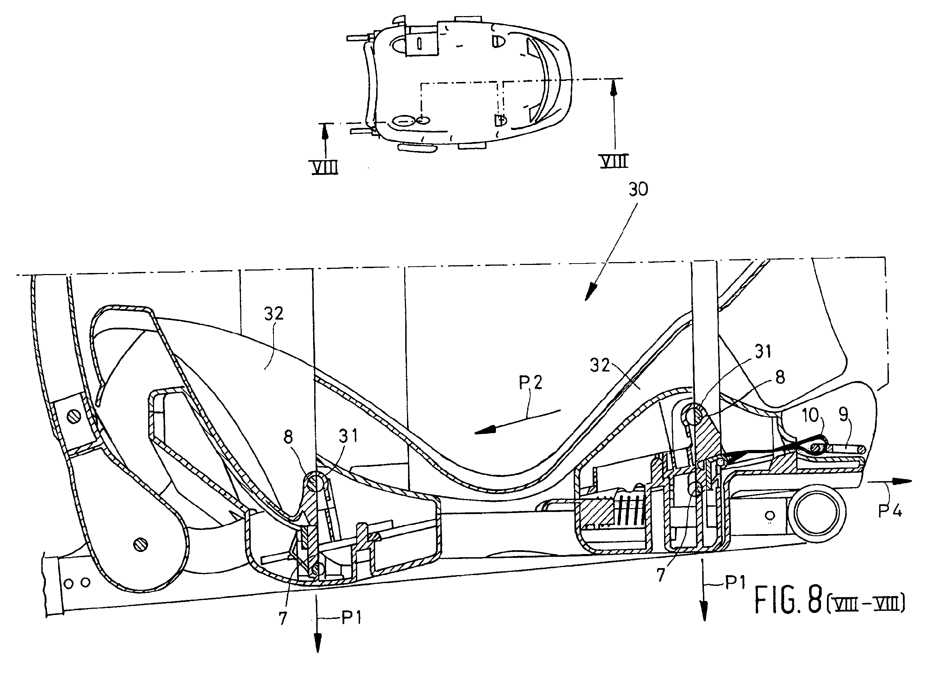

Figure 1 shows the chassis 1 according to the invention, comprising a metal frame 2, a clamping bracket 3 to be positioned against a vehicle seat, connecting pieces 4, which can be fixed to a vehicle seat, and a plastic element 5 positioned on the metal frame. The plastic element 5 is provided with two slots 6 extending parallel to each other, into which flanges present on a bottom side of an infant vehicle seat 30 can be positioned. Four locating pins 7 extend into the slots 6 from the plastic element 5. Locking pins 8 are positioned near the locating pins 7 in the plastic element 5, which locking pins can be moved into engagement with openings 31 in the flanges 32 present on the bottom side of the infant vehicle seat 30 (Figure 8).

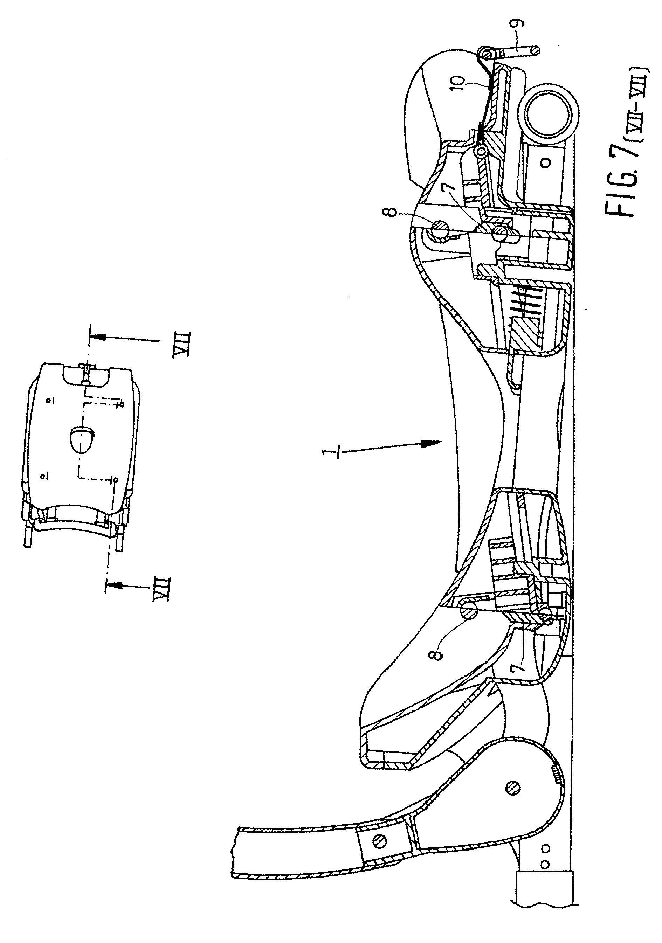

Figure 1 furthermore shows a handle 9, which is connected to a strap 10. The function of the handle 9 and the strap 10 will be explained in more detail yet with reference to Figures 7, 8.

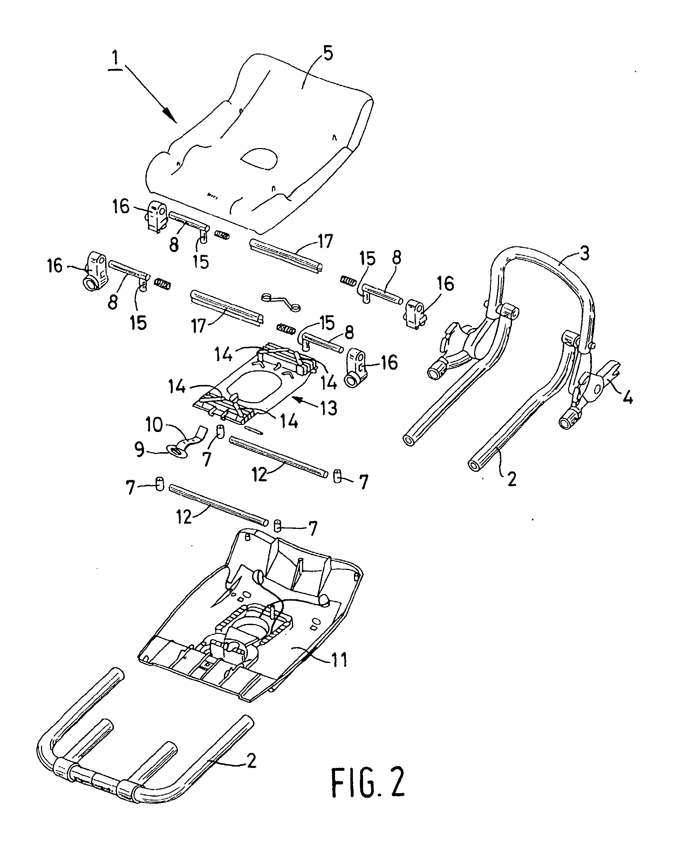

Figure 2 is a perspective, exploded view of the chassis 1 that is shown in Figure 1. As the Figure shows, the chassis 1 comprises a second plastic element 11. Positioned between the plastic element 5, 11 are two parallel locating rods 12, which are connected at their ends to the substantially vertically extending locating pins 7. Positioned on the locating rods 12 is a slide 13, which is provided with two pairs of slots 14 extending towards each other in the shape of a V. Pins 15 are slidably received in the slots 14 from a side remote from the locating rods 12, which pins 15 are connected to locking pins 8 extending transversely thereto. The locking pins 8 extend on a side remote from the pins 15 through bearing blocks 16 which are rigidly connected to the plastic elements 5, 11. A U-shaped section 17 extends between two opposing bearing blocks 16, over the locking pins 8 positioned therebetween and the pins 15 connected thereto.

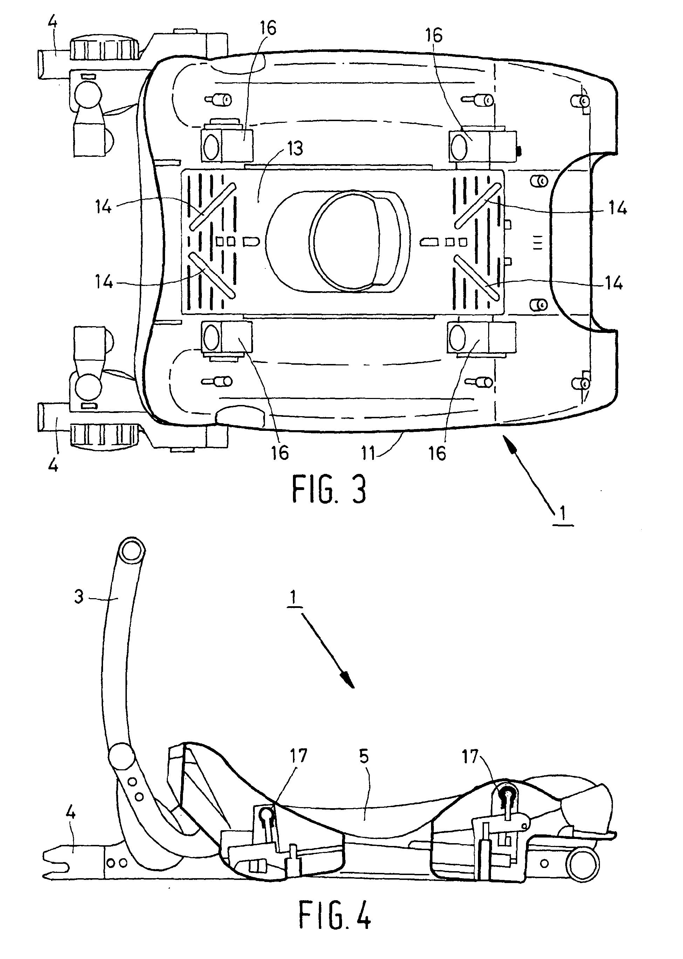

Figure 3 is a top plan view of the chassis 1, which clearly shows the plastic element 11 and the slide 13 present therein. Also the slots 14, which are arranged in pairs in the shape of a V, are clearly shown in Figure 3.

Figure 4 is a cross-sectional view of the chassis 1 that is shown in Figure 1, in which the U-shaped guide section 17 can be clearly distinguished.

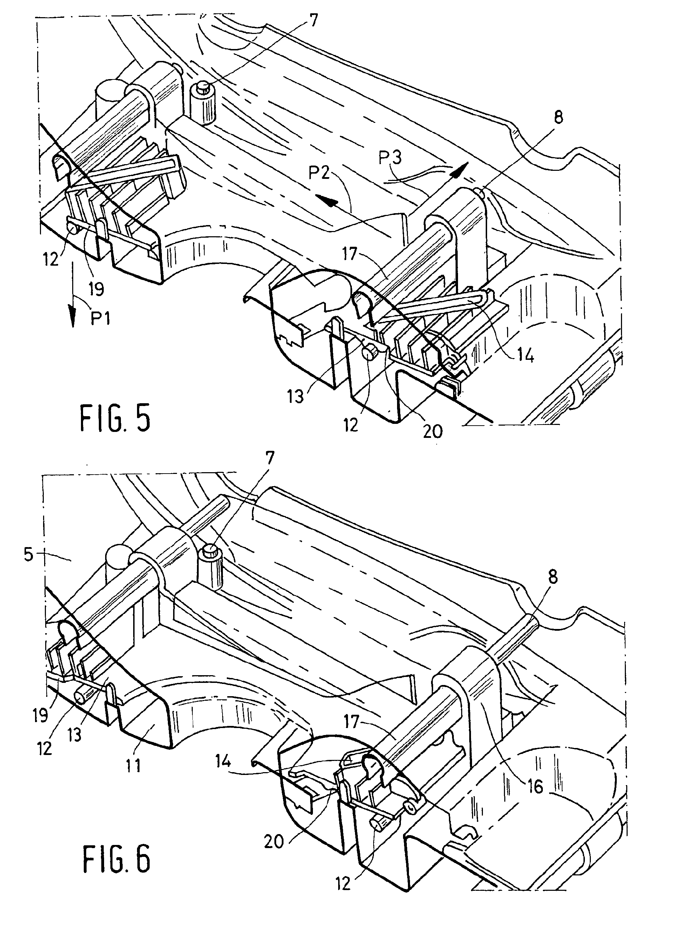

The operation of the chassis 1 will now be explained in more detail with reference to Figures 5-8. The chassis 1 is moved into engagement with the brackets present in the vehicle seat via the connecting pieces 4. Such a connection is known per se and will not be discussed in more detail herein, therefore.

Once the chassis 1 has been connected to the vehicle seat, an infant vehicle seat 1 can be positioned on the chassis 1. Before the infant vehicle seat is positioned on the chassis 1, the chassis takes up the position that is shown in Figures 1, 5 and 7. The locating pins 7 extend into the slots 6, and the locating rods 12 extending between the locating pins 7 abut against edges 19, 20 of the slide 13 under the influence of the spring force of a spring. The slide 13 is pressed against the locating rods 12 under the influence of the spring force of another spring. In this position of the slide 13, the slots 14 are positioned in such a manner with respect to the section 17 that the ends of the slots 14 located near the centre of the chassis 1 are positioned under the sections 17. The pins 15 accommodated in the slots 14 are also positioned relatively close to the centre of the chassis 1, therefore, so that the locking pins 8 connected to the pins 15 are positioned almost entirely within the chassis 1.

When flanges 32 connected to a bottom side of an infant vehicle seat 30 are placed into the slots 6, said flanges 32 will press the locating pins 7 in the direction indicated by the arrow P1. Once all the locating pins 7 have been moved in the direction indicated by the arrow P1, the locating rods 12 will no longer be in engagement with the edges 19, 20 of the slide 13. The slide 13 will now be moved in the direction indicated by the arrow P2 under the influence of a spring force being exerted on the slide 13. This will cause the pins 15 accommodated in the slots 14 of the slide 13 to move in the direction indicated by the arrow P3, as a result of which the locking pins 8 connected to the pins 15 are moved into the slots 6. This causes the locking pins 8 to engage in the openings 31 present in flanges 32 of the infant vehicle seat 30 (Figure 8).

As is shown in Figure 5, the locking direction P2 extends transversely to the direction in which the locking pins 8 are moved. The arrangement in V-shaped pairs of the slots 14 in the slide 13 makes it possible to move four locking pins in two directions away from each other by a single movement of the slide 14.

If one of the locating pins 7 is not depressed when the infant vehicle seat is being positioned on the chassis 1, the locating rod 12 will not be disconnected from the slide 13 at the location of said locating pins 7, as a result of which the slide 13 cannot be moved in the locking direction indicated by the arrow P2. Movement of the slide 13 will not be possible until all the locating pins 7 are depressed.

When the infant vehicle seat 30 is to be removed from the chassis 1, a manual pulling force is exerted on the handle 9 in the direction indicated by the arrow P4 (see Figure 8). To this end, a force must be exerted on the slide 13, by means of which force the spring force being exerted on the slide 13 is overcome. The slide 13 is now moved from the position shown in Figure 6 to the position shown in Figure 5, during which movement the locking pins 8 are moved in the opposite direction of the arrow P3, out of the infant vehicle seat 30.

If the handle 9 is accidentally pulled, the slide 13 will move in the direction indicated by the arrow P2 again under the influence of spring force once the handle 9 is released, and the locking pins will come into engagement again with openings 31 present in the flanges 32 of the infant vehicle seat 30. As a result, the locking engagement between the infant vehicle seat and the chassis 1 is restored in a simple manner.

Instead of four locking pins, any number of locking pins 8 may be used. It is also possible to use a number of locating pins different from the number of locking pins.

Tilting of the locking pin 8 and the pin 15 connected thereto about the central axis of the locking pin 8 is prevented in a simple manner by the U-shaped section 17, thus preventing the pins 15 from undesirably moving out of the slots 14 of the slide 13.

It is also possible to position the infant vehicle seat on a baby buggy instead of on a vehicle seat, in which case the baby buggy will be fitted with the chassis according to the invention. Said chassis may be detachably connected to the baby buggy. The chassis may also be fixedly connected to the baby buggy, however.

In order to facilitate placement of the locking pins 8 into the openings 31 in the flanges 32 of the infant vehicle seat 30, the shape of the slots 6 and that of the flanges 32 is preferably designed to enable unequivocal and unidirectional engagement.

## Claims

1. A chassis (1) suitable for attaching an infant vehicle seat (30) to a vehicle seat, in which the chassis can be detachably attached to the vehicle seat, whilst the infant vehicle seat can be detachably connected to the chassis, **characterized in that** the chassis comprises a number of locating pins (7) which are movable against spring force, a slide (13) which is movable against spring force, and a number of locking pins (8) which are movable by means of said slide (13), in which the locating pins (7) can be moved against spring force from a first position to a second position by positioning the infant vehicle seat on the chassis, after which the slide (13) can be moved in a locking direction under the influence of spring force, said locking pins (8) being movable from a first position, in which they are positioned in the chassis, to a second position, in which they engage in the infant vehicle seat.

2. A chassis according to claim 1, **characterized in that** the slide (13) can be moved in the locking direction when all the locating pins (7) are in the second position.

3. A chassis according to any one of the preceding claims, **characterized in that** the slide (13) is provided with a number of slots (14) extending at an angle to the locking direction, with the locking pins (8), which extend transversely to the locking direction, being provided with rods (12) which are slidably accommodated in said slots.

4. A chassis according to any one of the preceding claims, **characterized in that** two locating pins (7) are interconnected by means of a locating rod (12), which locating rod is in spring-loaded engagement with the slide (13) in the first position of at least one of the locating pins (7).

5. A chassis according to claim 4, **characterized in that** the slide (13) can be moved against spring force in the direction opposed to the locking direction, said slide being in engagement with a locating rod (12) connected to at least one locating pin (7) after the infant vehicle seat has been lifted from said at least one locating pin,.

6. A chassis according to any one of the preceding claims, **characterized in that** the chassis comprises at least four locking pins (8), which are arranged in pairs on either side of the chassis.

7. A chassis according to any one of the preceding claims, **characterized in that** the locking pin (8) is slidably accommodated in a U-shaped section, which is spaced from the slide (13) by some distance.

8. An assembly comprising a chassis (1) according to any one of the preceding claims, as well as an infant vehicle seat (30), **characterized in that** the infant vehicle seat comprises flanges provided with openings (31), into which the locking pins (8) can be positioned.

9. An infant vehicle seat suitable for use in combination with an assembly according to claim 8, **characterized in that** the infant vehicle seat comprises flanges (32) provided with openings (31).

## Patentansprüche

1. Träger (1), geeignet zum Befestigen eines Fahrzeugkindersitzes (30) an einem Fahrzeugsitz, wobei der Träger abnehmbar am Fahrzeugsitz befestigt werden kann, während der Fahrzeugkindersitz abnehmbar mit dem Träger verbunden werden kann, **dadurch gekennzeichnet, dass** der Träger eine Anzahl Passstifte (7), die gegen Federkraft beweglich sind, einen gegen Federkraft verschiebbaren Schlitten (13) und eine Anzahl von Passstiften (8), die mittels dieses Schlittens (13) bewegbar sind, umfasst, wobei die Passstifte (7) gegen Federkraft aus einer ersten Lage in eine zweiten Lage bewegt werden können, indem der Fahrzeugkindersitz auf den Träger gestellt wird, wonach der Schlitten (13) unter Einfluss von Federkraft in einer Einrastrichtung bewegt werden kann, wobei die Passstifte (8) aus einer ersten Lage, in der sie sich im Träger befinden, in eine zweite Lage, in der sie in den Fahrzeugkindersitz eingreifen, bewegt werden können.

2. Träger nach Anspruch 1, **dadurch gekennzeichnet, dass** der Schlitten (13) in der Einrastrichtung bewegt werden kann, wenn alle Passstifte (7) in der zweiten Lage sind.

3. Träger nach einem der vorangehenden Ansprüche, **dadurch gekennzeichnet, dass** der Schlitten (13) mit einer Anzahl von Schlitzen (14) versehen ist, die sich im Winkel zur Einrastrichtung erstrecken, wobei die Passstifte (8), die sich quer zur Einrastrichtung erstrecken, mit Stäben (12) versehen sind, die in diesen Schlitzen gleitfähig aufgenommen sind.

4. Träger nach einem der vorangehenden Ansprüche, **dadurch gekennzeichnet, dass** zwei Passstifte (7) mittels eines Fixierstabs (12) miteinander verbunden sind, wobei der Fixierstab in der ersten Lage zumindest eines der Passstifte (7) in federbelastetem Eingriff mit dem Schlitten (13) ist.

5. Träger nach Anspruch 4, **dadurch gekennzeichnet, dass** der Schlitten (13) gegen Federkraft entgegengesetzt zur Einrastrichtung bewegt werden kann, wobei der Schlitten im Eingriff mit einem zumindest mit einem Passstift (7) verbundenen Fixierstab (12) ist, nachdem der Fahrzeugkindersitz von diesem zumindest einen Passstift abgehoben wurde.

6. Träger nach einem der vorangehenden Ansprüche, **dadurch gekennzeichnet, dass** er zumindest vier Passstifte (8) umfasst, welche auf beiden Seiten des Trägers paarweise angeordnet sind.

7. Träger nach einem der vorangehenden Ansprüche, **dadurch gekennzeichnet, dass** der Passstift (8) gleitfähig in einem U-förmigen Abschnitt aufgenommen ist, der um eine gewisse Distanz vom Schlitten (13) beabstandet ist.

8. Einrichtung, umfassend einen Träger (1) nach einem der vorangehenden Ansprüche, wie auch einen Fahrzeugkindersitz (30), **dadurch gekennzeichnet, dass** der Fahrzeugkindersitz Seitenteile umfasst, die mit Öffnungen (31) versehen sind, in welche die Passstifte (8) eingesetzt werden können.

9. Fahrzeugkindersitz, geeignet zur Benutzung in Kombination mit einer Einrichtung nach Anspruch 8, **dadurch gekennzeichnet, dass** der Fahrzeugkindersitz mit Öffnungen (31) versehene Seitenteile (32) umfasst.

## Revendications

1. Châssis (1) adapté à la fixation d'un siège de véhicule pour enfant (30) sur un siège de véhicule, dans lequel le châssis peut être fixé de manière démontable sur le siège de véhicule, alors que le siège de véhicule pour enfant peut être relié de manière démontable au châssis, **caractérisé en ce que** le châssis comprend plusieurs doigts de positionnement (7) qui sont mobiles à l'encontre d'une force de ressort, une pièce coulissante (13) qui est mobile à l'encontre d'une force de ressort, et plusieurs doigts de blocage (8) qui sont mobiles au moyen de ladite pièce coulissante (13), dans lequel les doigts de positionnement (7) peuvent être déplacés à l'encontre d'une force de ressort depuis une première position jusqu'à une deuxième position en positionnant le siège de véhicule pour enfant sur le châssis, après quoi la pièce coulissante (13) peut être déplacée dans une direction de blocage sous l'influence d'une force de ressort, lesdits doigts de blocage (8) étant mobiles depuis une première position, dans laquelle ils sont positionnés dans le châssis, jusqu'à une deuxième position, dans laquelle ils s'engagent dans le siège de véhicule pour enfant.

2. Châssis selon la revendication 1, **caractérisé en ce que** la pièce coulissante (13) peut être déplacée dans la direction de blocage lorsque tous les doigts de positionnement (7) sont dans la deuxième position.

3. Châssis selon l'une quelconque des revendications précédentes, **caractérisé en ce que** la pièce coulissante (13) est pourvue de plusieurs fentes (14) s'étendant avec un angle par rapport à la direction de blocage, avec les doigts de blocage (8), qui s'étendent transversalement à la direction de blocage, qui sont pourvus de tiges (12) qui sont reçues de façon coulissante dans lesdites fentes.

4. Châssis selon l'une quelconque des revendications précédentes, **caractérisé en ce que** deux doigts de positionnement (7) sont interconnectés au moyen d'une tige de positionnement (12), laquelle tige de positionnement est en engagement chargé par ressort avec la pièce coulissante (13) dans la première position d'au moins un des doigts de positionnement (7).

5. Châssis selon la revendication 4, **caractérisé en ce que** la pièce coulissante (13) peut être déplacée à l'encontre d'une force de ressort dans la direction opposée à la direction de blocage, ladite pièce coulissante étant en engagement avec une tige de positionnement (12) reliée à au moins un doigt de positionnement (7) une fois que le siège de véhicule pour enfant a été soulevé dudit au moins un doigt de positionnement.

6. Châssis selon l'une quelconque des revendications précédentes, **caractérisé en ce que** le châssis comprend au moins quatre doigts de blocage (8), qui sont disposés en paires de chaque côté du châssis.

7. Châssis selon l'une quelconque des revendications précédentes, **caractérisé en ce que** le doigt de blocage (8) est reçu de façon coulissante dans une section en forme de U, qui est espacée de la pièce coulissante (13) d'une certaine distance.

8. Ensemble comportant un châssis (1) selon l'une quelconque des revendications précédentes, ainsi qu'un siège de véhicule pour enfant (30), **caractérisé en ce que** le siège de véhicule pour enfant comprend des flancs pourvus d'ouvertures (31), dans lesquels les doigts de blocage (8) peuvent être positionnés.

9. Siège de véhicule pour enfant prévu pour une utilisation en combinaison avec un ensemble selon la revendication 8, **caractérisé en ce que** le siège de véhicule pour enfant comprend des flancs (32) pourvus d'ouvertures (31).
